# EUROPEAN PATENT SPECIFICATION

(11) **EP 2 206 084 B1**
(45) Date of publication and mention of the grant of the patent: **18.04.2012**
(21) Application number: 08807562.7
(22) Date of filing: 05.09.2008
(51) Int. Cl.: G06T 7/00

(54) **IMAGE PROCESSING WITH COMPUTER AIDED DETECTION AND/OR DIAGNOSIS**
BILDBEARBEITUNG MIT COMPUTERUNTERSTÜTZTER ERKENNUNG UND/ODER DIAGNOSE
TRAITEMENT D'IMAGES AVEC DÉTECTION OU DIAGNOSTIC ASSISTÉ PAR ORDINATEUR

(30) Priority: 10.09.2007 EP 07116044
(43) Date of publication of application: 14.07.2010
(73) Proprietor: Koninklijke Philips Electronics N.V., 5621 BA Eindhoven (NL); Philips Intellectual Property & Standards GmbH, 20099 Hamburg (DE)
(72) Inventor: KOEHLER, Thomas, NL-5656 AE Eindhoven (NL); WIEMKER, Rafael, NL-5656 AE Eindhoven (NL)
(74) Representative: Van Velzen, Maaike Mathilde
(86) International application number: PCT/IB2008/053611
(87) International publication number: WO 2009/034508

(56) References cited:
- EP-A- 1 398 722
- WO-A-2006/085166
- WIEMKER R ET AL: "Aspects of computer-aided detection (CAD) and volumetry of pulmonary nodules using multislice CT." THE BRITISH JOURNAL OF RADIOLOGY 2005, vol. 78 Spec No 1, 2005, pages S46-S56, XP002524095 ISSN: 0007-1285 cited in the application
- GOO J M ET AL: "Volumetric measurement of synthetic lung nodules with multidetector row CT: effect of various image reconstruction parameters and segmentation thresholds on measurement accuracy" RADIOLOGY RADIOL. SOC. NORTH AMERICA USA, vol. 235, no. 3, June 2005 (2005-06), pages 850-856, XP007908203 ISSN: 0033-8419
- GOO JIN MO: "Computer-aided detection of lung nodules on chest CT: issues to be solved before clinical use." KOREAN JOURNAL OF RADIOLOGY : OFFICIAL JOURNAL OF THE KOREAN RADIOLOGICAL SOCIETY 2005 APR-JUN, vol. 6, no. 2, April 2005 (2005-04), pages 62-63, XP007908204 ISSN: 1229-6929

## Description

### FIELD OF THE INVENTION

The invention relates to an image processing device and a method for the evaluation of image raw-data of a body region generated with an imaging device like a CT scanner. Moreover, it relates to an examination apparatus comprising such an image processing device.

### BACKGROUND OF THE INVENTION

The US 2004/0068167 A1 discloses a method and a system for processing image data that are generated e.g. by a CT scanner, wherein a computer aided diagnosis system identifies a feature of interest in the image data and then optionally generates a new image in dependence on the identified feature.

EP 1 398 722 A2 discloses a method and system for generating and processing image data based upon analysis of an initial image by a computer-aided diagnosis (CAD) algorithm. The CAD algorithm performs various types of analysis, including segmentation, edge, and structure identification. A post-processing enhances the view of a feature of interest in the image as identified by the CAD analysis. Further processing of the image data may be performed to further enhance the image. Image enhancement can include highlighting the feature of interest and changing the spatial resolution, for example, zooming in or out, of the reconstructed image.

### SUMMARY OF THE INVENTION

Based on this situation it was an object of the present invention to provide alternative means for automatically evaluating medical image data, wherein it is desirable to achieve better results with respect to a computer aided detection and/or diagnosis.

This object is achieved by an image processing device according to claim 1, by an examination apparatus according to claim 8, by a method according to claim 9, a computer program product according to claim 10, a data carrier according to claim 11, and a data signal according to claim 12. Preferred embodiments are disclosed in the dependent claims.

According to its first aspect, the invention provides an image processing device for the automatic evaluation of image raw-data of a body region generated with an imaging device, wherein the term "body region" generally refers to an object that shall be examined, particularly to a part of a human or animal body. The term "image raw-data" shall refer to data or signals as they are provided by an imaging device, e.g. by a Computed Tomography (CT) scanner. These data have usually undergone no or only a limited preprocessing and do typically not directly correspond to a geometrical image (e.g. a cross section) of the body region. The image processing device comprises the following components, which may be realized by dedicated hardware, by software, or a mixture of both:
a) A "data input module" for receiving the image raw-data of the body region of interest that were generated with a suitable imaging device. The data input module typically comprises a standardized interface to which the imaging device can be coupled for transmitting its image raw-data. Moreover, the data input module typically comprises some memory (e.g. RAM, hard disk or the like) in which the image raw-data can be stored for later use.
b) A "reconstruction module" for reconstructing a first reconstructed image of the body region from the image raw-data that have been received by the data input module,
   wherein this reconstruction takes place according to given reconstruction parameters. The reconstruction process usually requires elaborate calculations on the image raw-data according to given algorithms that apply the mentioned reconstruction parameters. In case the image raw-data correspond to projections generated by a CT scanner, the reconstruction will for example apply algorithms well known from the field of Computed Tomography (e.g. filtered backprojection) to reconstruct a section through the X-rayed body volume.
c) A computer aided detection and/or diagnosis (abbreviated CAD in the following) module for CAD evaluating the first reconstructed image that was reconstructed by the reconstruction module. CAD procedures are well known to a person skilled in the art of medical image data processing. Computer aided detection describes the automated locating of anomalies and disease symptoms in medical image data, and bringing their location to the attention of the medical doctor. Computer aided diagnosis comprises the automatic computation of certain significant features from the image material which support a differential diagnosis e.g. whether the anomaly in question is malignant or benign. Details about CAD can be found in literature (e.g. K. Doi, "Current status and future potential of computer-aided diagnosis in medical imaging", British Journal of Radiology, Special Issue 78: p.3-19, 2005; R. Wiemker, P. Rogalla, T. Blaffert, D. Sifri, O. Hay, E. Shah, R. Truyen, T. Fleiter, "Aspects of computer-aided detection (CAD) and volumetry of pulmonary nodules using multislice CT", British Journal of Radiology 78, p.46-56 (2005); Li Q., Li F., Armato SG III, Suzuki K., Shiraishi J., Abe H., Engelmann R., Nie Y., MacMahon H., Doi K.: "Computer aided diagnosis in thoracic CT", Seminars in Ultrasound CT and MRI, 26: 357-363 (2005)).
d) A control link, for example realized by a hard-wired connection or by a data exchange channel between software modules, by which the CAD module can set the reconstruction parameters for the first reconstructed image of the body region that is CAD evaluated by the CAD module, wherein the CAD evaluation of the first reconstructed image is the first performed CAD evaluation.

The described image processing device has the advantage that the CAD algorithm can determine (via the reconstruction parameters) how the very first image it receives for evaluation is reconstructed. This is a crucial difference with respect to procedures known in the state of the art, in which the first image that is reconstructed from the image raw-data and that is evaluated by the CAD algorithm is reconstructed according to the requirements of the visual inspection by the medical staff. The generation of such visualization images can even be considered as a standard step in the workflow of a clinical environment as these images allow the radiologist to check if the generated image raw-data are acceptable or e.g. corrupted by a movement of the patient. A CAD algorithm that has to work on these images generated for visual inspection by a human observer may then however overlook critical features in the image that it could have detected if the image would have been reconstructed optimally with respect to the requirements of the CAD algorithm. This error of the CAD algorithm may not be corrected even if the CAD algorithm may later require particular reconstructions of images, because the first mistake will often lead the later reconstructions into a wrong direction. The image processing device that is proposed here is based on an insight into these problems and allows, via the control link, the CAD module to prescribe its own optimal parameters for the reconstruction of the first image of the body region that it gets for evaluation.

Moreover, it should be noted that the image that is reconstructed according to the prescriptions of the CAD module can usually also be used by a human observer for checking e.g. the quality of the generated image raw-data. Alternatively, an image according to the requirements of the human observer may be reconstructed in parallel as long as the first image that is evaluated by the CAD module has been reconstructed according to the requirements of this module.

It was already indicated that the image raw-data may preferably correspond to X-ray projections of the body region of interest taken from different directions. X-ray projections of this kind are for example generated by rotational X-ray devices (with an X-ray source and an X-ray detector being mounted on a common C-arm that can be rotated about an axis) and particularly by CT scanners.

The image that is reconstructed by the reconstruction module may have any format that can be processed by the CAD module. Typically, this image corresponds to a two-dimensional section through the body region of interest, wherein this section geometrically maps the spatial distribution of characteristic material parameters like the X-ray absorption coefficient. Preferably, the reconstruction module is adapted to reconstruct three-dimensional images of the body region, thus providing the most complete information about said region.

The reconstruction parameters that can be set by the CAD module can preferably comprise the size, the resolution, the thickness, and/or the spacing of the reconstructed image. They may further comprise the requirement of additional processing steps, which are often not requested by the radiologist because they further prolong the processing time. Examples for this are off-focal radiation correction, iterative bone-beam-hardening correction, or the application of an additional adaptive filter.

The reconstruction module can for example demand the reconstruction of a small sub-volume of the body region, that comprises an anatomy of interest, with a high resolution, thus concentrating and optimally using the data processing power for aspects of interest.

According to another embodiment of the invention, the reconstruction parameters set by the CAD module comprise a criterion according to which raw-data are selected or weighted during reconstruction. It should be noted in this context that the selection of raw-data can be interpreted as a particular case of weighting (i.e. giving selected data a weight of one and deselected data a weight of zero). By weighting the image raw-data, particular aspects of interest can be pronounced in the reconstructed image.

A particular example of the aforementioned embodiment is the case that the criterion for selection or weighting of image raw-data comprises the phase of these image raw-data with respect to a periodic body movement. Periodic body movements like heartbeat or breath cause problems in the reconstruction of medical images as image raw-data taken at different points in time will refer to different (shifted) geometries of the body region. The proposed embodiment tries to solve this problem by taking the phase of the periodic body movement, during which the image raw-data were generated, into account. Thus only those X-ray projections of a CT scanner may be selected for the reconstruction that correspond to the same phase of the cardiac rhythm and/or of respiration. The phase of the periodic body movement is preferably recorded synchronously to the generation of image raw-data, e.g. by measuring an electrocardiogram (ECG) or the chest motion. In an ecg-gated reconstruction procedure, only those X-ray projections are then used that correspond to (approximately) the same spike of the ECG. This guarantees that the collected image raw-data correspond to approximately the same geometry of the body region.

In another embodiment of the invention, the CAD module is adapted to extract from a given reconstructed image at least a part of the associated reconstruction parameters and reuse them as reconstruction parameters for the first reconstructed image that are set via the control link. The "given reconstructed image" may in this case particularly be an image that was reconstructed according to the requirements of a visual inspection by a radiologist, and the CAD module may extract from them for example the field of view (FOV) and/or the coverage (i.e. the extent of the volume in z-direction). Reusing these parameters has the advantage that the first reconstructed image that is evaluated by the CAD module can be made as much as possible (i.e. without adverse effect on the CAD procedure) compatible to the given image.

The invention further relates to an examination apparatus comprising the following components:
a) An imaging device, particularly a CT scanner, for generating image raw-data of a body region.
b) An image processing device of the kind described above for the evaluation of the aforementioned image raw-data, i.e. a device with a data input module for receiving image raw-data, a reconstruction module for reconstructing a first reconstructed image of the body region from the image raw-data according to given reconstruction parameters, a CAD module for CAD evaluating the first reconstructed image, and a control link by which the CAD module can set the reconstruction parameters for the first reconstructed image that it CAD evaluates, wherein the CAD evaluation of the first reconstructed image is the first performed CAD evaluation.

Moreover, the invention relates to a method for the evaluation of image raw-data of a body region generated with an imaging device, comprising the following steps:
a) receiving the image raw-data;
b) reconstructing a first reconstructed image of the body region from the image raw-data according to given reconstruction parameters;
c) CAD evaluating the first reconstructed image by a CAD - i.e. computer aided detection and/or diagnosis - module;
wherein the CAD module sets the reconstruction parameters for the first reconstructed image of the body region that is CAD evaluated by the CAD module, wherein the CAD evaluation of the first reconstructed image is the first performed CAD evaluation.

The image processing device will typically be programmable, e.g. it may include a microprocessor or an FPGA. Accordingly, the present invention further includes a computer program product which provides the functionality of any of the methods according to the present invention when executed on a computing device.

Further, the present invention includes a data carrier, for example a floppy disk, a hard disk, or a compact disc (CD-ROM), which stores the computer product in a machine readable form and which executes at least one of the methods of the invention when the program stored on the data carrier is executed on a computing device.

Nowadays, such software is often offered on the Internet or a company Intranet for download, hence the present invention also includes transmitting the computer product according to the present invention over a local or wide area network. The computing device may include a personal computer or a work station. The computing device may include one of a microprocessor and an FPGA.

The above examination apparatus, method, computer program product, data carrier and transmission procedure comprise as an essential component the concept of the image processing device described above. Reference is therefore made to the above description for more information about the details, advantages and modifications of these elements.

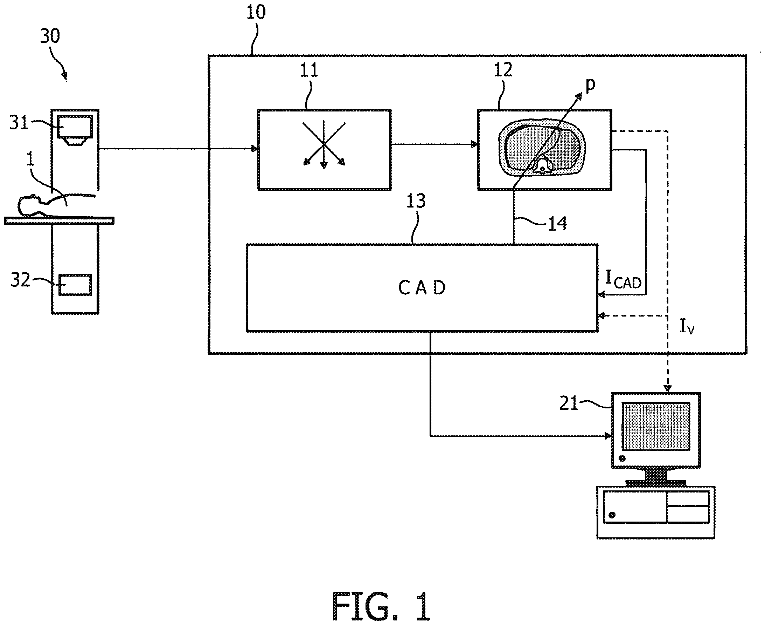

### BRIEF DESCRIPTION OF THE DRAWING

These and other aspects of the invention will be apparent from and elucidated with reference to the embodiment(s) described hereinafter. These embodiments will be described by way of example with the help of the accompanying single drawing which shows schematically the components of a medical examination apparatus according to the present invention.

### DETAILED DESCRIPTION OF EMBODIMENTS

One component of the examination apparatus is the CT scanner 30 serving as an imaging device. As usual, the CT scanner 30 comprises an X-ray source and an X-ray detector (not shown) that can rotate on a circle about a patient 1, thus generating X-ray projections of a body region of the patient from different directions.

The CT scanner 30 is coupled to an image processing device 10, for example a workstation. The blocks that are shown within the image processing device 10 primarily refer to different logical steps of the data processing procedure. They may be realized by different and/or common units of hardware and/or software.

The first component of the image processing device 10 is a data input module 11 which receives the image raw-data (i.e. the X-ray projections) from the CT scanner 30. The data input module 11 usually comprises a memory for storing the image raw-data.

The next component is a reconstruction module 12 which has access to be received image raw-data in the data input module 11 and which can process them according to a given reconstruction algorithm, e.g. filtered backprojection. The reconstruction module 12 thus generates images of the body region that was X-rayed by the CT scanner 30. The reconstructed images may particularly be two-dimensional sectional images of the body and/or three-dimensional reconstructions of a body volume (e.g. composed of a sequence of sections).

The images I_{CAD} that have been reconstructed by the reconstruction module 12 are provided to a computer aided detection and/or diagnosis (CAD) module 13 which primarily comprises software for the automatic image processing and for the extraction of particular features in the images.

The drawing further shows in dashed lines a link from the reconstruction module 12 to a computer monitor 21 on which a radiologist can view the reconstructed images Iᵥ and for example decide if the exposure is acceptable or if it has to be repeated (e.g. because the patient 1 has moved).

In the known CAD procedures like lung nodule detection, the radiologist specifies the reconstruction parameters used by the reconstruction module 12 and takes a first look at the images before these images are passed to the CAD system. Reconstruction parameters are thus selected according to the personal preferences of the radiologist and might be non-optimal for the CAD system. In particular parameters like image size, image thickness, and image overlap are often selected to provide a reasonable trade-off between diagnostic value and required time for image review by the radiologist. On the other hand, a CAD system has a different trade-off curve and in many cases, the result of the CAD is not optimal because the algorithm suffers from non-optimal setting for reconstruction.

To address this problem and to improve the result of the CAD it is proposed here that the CAD module 13 can request its own reconstruction. Parameters like field of view and coverage can in this approach be extracted from the usual images Iᵥ provided to the radiologist, while other reconstruction parameters p like image size, image thickness, and in-plane resolution can be requested via a control link 14 between the CAD module 13 and the reconstruction module 12 according to the known needs of the CAD system. The reconstruction module 12 can thus provide the CAD module 13 from the beginning with an image I_{CAD} that was reconstructed optimally for computer aided detection and/or diagnosis.

If the original set of raw-data was for example a cardiac scan and if CAD is done to look for incidental findings, the CAD system might even request additionally a gated reconstruction in order to evaluate properly areas near the heart, where non-gated reconstructions suffer from lung-motion induced by the beating heart.

Finally it is pointed out that in the present application the term "comprising" does not exclude other elements or steps, that "a" or "an" does not exclude a plurality, and that a single processor or other unit may fulfill the functions of several means. The invention resides in each and every novel characteristic feature and each and every combination of characteristic features. Moreover, reference signs in the claims shall not be construed as limiting their scope.

## Claims

1. An image processing device (10) for the evaluation of image raw-data of a body region generated with an imaging device (30), comprising
a) a data input module (11) for receiving the image raw-data;
b) a reconstruction module (12) for reconstructing a first image (I_{CAD}) of the body region from the image raw-data according to given reconstruction parameters (p);
c) a CAD - i.e. computer aided detection and/or diagnosis - module (13) for CAD evaluating the first reconstructed image (I_{CAD});
d) a control link (14) by which the CAD module (13) can set the reconstruction parameters (p) for the first reconstructed image (I_{CAD}) of the body region that is CAD evaluated by the CAD module, wherein the CAO evaluation of the first reconstructed image is the first performed CAD evaluation.

2. The image processing device (10) according to claim 1,
**characterized in that** the imaging raw-data correspond to X-ray projections of the body region taken from different directions.

3. The image processing device (10) according to claim 1,
**characterized in that** the reconstruction module is adapted to reconstruct two-dimensional sectional images and/or three-dimensional images of the body region.

4. The image processing device (10) according to claim 1,
**characterized in that** the reconstruction parameters (p) comprise the size, the resolution, the thickness and/or the spacing of the reconstructed image (I_{CAD}) and/or the request to apply additional processing steps like beam-hardening correction or off-focal radiation correction.

5. The image processing device (10) according to claim 1,
**characterized in that** the reconstruction parameters (p) comprise a criterion according to which image raw-data are selected or weighted during reconstruction.

6. The image processing device (10) according to claim 5,
**characterized in that** the criterion comprises the phase of the image raw data with respect to a periodic body movement like heartbeat or breath.

7. The image processing device (10) according to claim 1,
**characterized in that** the CAD module (13) can extract from a given reconstructed image (Iᵥ) at least a part of the corresponding reconstruction parameters and reuse them as reconstruction parameters (p) for the first reconstructed image (I_{CAD}) that are set via the control link (14).

8. An examination apparatus, comprising
a) an imaging device, particularly a CT scanner (30), for generating image raw-data of a body region;
b) an image processing device (10) according to claim 1 for the evaluation of the image raw data.

9. A method for the evaluation of image raw-data of a body region generated with an imaging device (30), comprising the following steps:
a) receiving the image raw-data;
b) reconstructing a first image (I_{CAD}) of the body region from the image raw-data according to given reconstruction parameters (p);
c) CAD evaluating the first reconstructed image (I_{CAD}) by a CAD - i.e. computer aided detection and/or diagnosis - module (13);
wherein the CAD module (13) sets the reconstruction parameters (p) for the first reconstructed image (I_{CAD}) of the body region that is CAD evaluated by the CAD module, wherein the CAO evaluation of the first reconstructed image is the first performed CAD evaluation.

10. A computer program product which, when executed by a computer, carries out a method according to claim 9.

11. A data carrier on which a computer program according to claim 10 is stored.

12. A data signal transmitted over a local or wide area telecommunications network which embodies instructions executable by a computer to perform the method according to claim 9.

## Patentansprüche

1. Bildverarbeitungseinrichtung (10) zur Auswertung von mit einer Bildgebungseinrichtung (30) erzeugten Rohbilddaten einer Körperregion, die Folgendes umfasst:
a) ein Dateneingabemodul (11) zum Empfang der Rohbilddaten,
b) ein Rekonstruktionsmodul (12) zum Rekonstruktion eines ersten Bildes (I_{CAD}) der Körperregion aus den Rohbilddaten gemäß vorgegebenen Rekonstruktionsparametern (p),
c) ein CAD-Modul (13), d. h. ein Modul zur computergestützten Detektion und/oder Diagnose, zur CAD-Auswertung des ersten rekonstruierten Bildes (I_{CAD}),
d) eine Steuerverbindung (14), durch die das CAD-Modul (13) die Rekonstruktionsparameter (p) für das erste rekonstruierte Bild (I_{CAD}) der Körperregion einstellen kann, das von dem CAD-Modul CAD-ausgewertet wird,
wobei die CAD-Auswertung des ersten rekonstruierten Bildes die erste durchgeführte CAD-Auswertung ist.

2. Bildverarbeitungseinrichtung (10) nach Anspruch 1,
**dadurch gekennzeichnet, dass** die Rohbilddaten Röntgenprojektionen der Körperregion entsprechen, die aus verschiedenen Richtungen aufgenommen wurden.

3. Bildverarbeitungseinrichtung (10) nach Anspruch 1,
**dadurch gekennzeichnet, dass** das Rekonstruktionsmodul so ausgelegt ist, dass es zweidimensionale Schnittbilder und/oder dreidimensionale Bilder der Körperregion rekonstruiert.

4. Bildverarbeitungseinrichtung (10) nach Anspruch 1,
**dadurch gekennzeichnet, dass** die Rekonstruktionsparameter (p) die Größe, die Auflösung, die Dicke und/oder den Schichtabstand des rekonstruierten Bildes (I_{CAD}) und/oder die Anforderung umfassen, zusätzliche Verarbeitungsschritte wie die Korrektur der Strahlaufhärtung oder die Korrektur der aus dem Fokus geratenen Strahlung anzuwenden.

5. Bildverarbeitungseinrichtung (10) nach Anspruch 1,
**dadurch gekennzeichnet, dass** die Rekonstruktionsparameter (p) ein Kriterium umfassen, nach dem Rohbilddaten während der Rekonstruktion ausgewählt oder gewichtet werden.

6. Bildverarbeitungseinrichtung (10) nach Anspruch 5,
**dadurch gekennzeichnet, dass** das Kriterium die Phase der Rohbilddaten hinsichtlich einer periodischen Körperbewegung wie Herzschlag oder Atmung umfasst.

7. Bildverarbeitungseinrichtung (10) nach Anspruch 1,
**dadurch gekennzeichnet, dass** das CAD-Modul (13) aus einem vorgegebenen rekonstruierten Bild (Iᵥ) zumindest einen Teil der entsprechenden Rekonstruktionsparameter (p) extrahieren und als Rekonstruktionsparameter (p) für das erste rekonstruierte Bild (I_{CAD}) wiederverwenden kann, die über die Steuerverbindung (14) eingestellt werden.

8. Untersuchungsgerät mit
a) einer Bildgebungseinrichtung, insbesondere einem CT-Scanner (30), zum Erzeugen von Rohbilddaten einer Körperregion,
b) einer Bildverarbeitungseinrichtung (10) nach Anspruch 1 zur Auswertung der Rohbilddaten.

9. Verfahren zur Auswertung von mit einer Bildgebungseinrichtung (30) erzeugten Rohbilddaten einer Körperregion, das die folgenden Schritte umfasst:
a) Empfangen der Rohbilddaten,
b) Rekonstruieren eines ersten Bildes (I_{CAD}) der Körperregion aus den Rohbilddaten gemäß vorgegebenen Rekonstruktionsparametern (p),
c) CAD-Auswerten des ersten rekonstruierten Bildes (I_{CAD}) durch ein CAD-Modul (13), d. h. mittels computergestützter Detektion und/oder Diagnose,
wobei das CAD-Modul (13) die Rekonstruktionsparameter (p) für das erste rekonstruierte Bild (I_{CAD}) der Körperregion einstellt, das von dem CAD-Modul CAD-ausgewertet wird,
wobei die CAD-Auswertung des ersten rekonstruierten Bildes die erste durchgeführte CAD-Auswertung ist.

10. Computerprogrammprodukt, das bei Ausführung durch einen Computer ein Verfahren nach Anspruch 9 durchführt.

11. Datenträger, auf dem ein Computerprogramm nach Anspruch 10 gespeichert ist.

12. Datensignal, das über ein lokales oder ein Großraum-Fernmeldenetz übertragen wird und das Befehle enthält, die durch einen Computer ausgeführt werden können, um das Verfahren nach Anspruch 9 durchzuführen.

## Revendications

1. Dispositif de traitement d'image (10) pour l'évaluation de données brutes d'image d'une région corporelle générées avec un dispositif d'imagerie (30), comprenant :
a) un module d'entrée de données (11) pour recevoir les données brutes d'image ;
b) un module de reconstruction (12) pour reconstruire une première image (I_{CAD}) de la région corporelle à partir des données brutes d'image en fonction de paramètres de reconstruction donnés (p) ;
c) un module de détection et/ou de diagnostic assisté par ordinateur, CAD (13) pour l'évaluation CAD de la première image reconstruite (I_{CAD}) ;
d) une liaison de commande (14) par laquelle le module CAD (13) peut régler les paramètres de reconstruction (p) pour la première image reconstruite (I_{CAD}) de la région corporelle qui est évaluée CAD par le module CAD,
dans lequel l'évaluation CAD de la première image reconstruite est la première évaluation CAD effectuée.

2. Dispositif de traitement d'image (10) selon la revendication 1,
**caractérisé en ce que** les données brutes d'imagerie correspondent à des projections de rayons X de la région corporelle prises dans différentes directions.

3. Dispositif de traitement d'image (10) selon la revendication 1,
**caractérisé en ce que** le module de reconstruction est apte à reconstruire des images en coupe bidimensionnelles et/ou des images tridimensionnelles de la région corporelle.

4. Dispositif de traitement d'image (10) selon la revendication 1,
**caractérisé en ce que** les paramètres de reconstruction (p) comprennent la taille, la résolution, l'épaisseur et/ou l'espacement de l'image reconstruite (I_{CAD}) et/ou la demande d'application d'étapes de traitement supplémentaires comme la correction de durcissement de faisceau ou la correction de rayonnement extrafocal.

5. Dispositif de traitement d'image (10) selon la revendication 1,
**caractérisé en ce que** les paramètres de reconstruction (p) comprennent un critère en fonction duquel des données brutes d'image sont sélectionnées ou pondérées au cours de la reconstruction.

6. Dispositif de traitement d'image (10) selon la revendication 5,
**caractérisé en ce que** le critère comprend la phase des données brutes d'image par rapport à un mouvement corporel périodique comme un battement cardiaque ou une respiration.

7. Dispositif de traitement d'image (10) selon la revendication 1,
**caractérisé en ce que** le module CAD (13) peut extraire d'une image reconstruite donnée (Iᵥ) au moins une partie des paramètres de reconstruction correspondants et les réutiliser en tant que paramètres de reconstruction (p) pour la première image reconstruite (I_{CAD}) qui sont réglés par le biais de la liaison de commande (14).

8. Appareil d'examen, comprenant :
a) un dispositif d'imagerie, particulièrement un tomodensitomètre (30), pour générer des données brutes d'image d'une région corporelle ;
b) un dispositif de traitement d'image (10) selon la revendication 1 pour l'évaluation des données brutes d'image.

9. Procédé d'évaluation de données brutes d'image d'une région corporelle générées avec un dispositif d'imagerie (30), comprenant les étapes suivantes :
a) la réception des données brutes d'image
b) la reconstruction d'une première image (I_{CAD}) de la région corporelle à partir des données brutes d'image en fonction de paramètres de reconstruction donnés (p) ;
c) l'évaluation CAD de la première image reconstruite (I_{CAD}) par un module de détection et/ou de diagnostic assisté par ordinateur, CAD (13) ;
dans lequel le module CAD (13) règle les paramètres de reconstruction (p) pour la première image reconstruite (I_{CAD}) de la région corporelle qui est évaluée CAD par le module CAD,
dans lequel l'évaluation CAD de la première image reconstruite est la première évaluation CAD effectuée.

10. Produit de programme informatique qui, lorsqu'il est exécuté par un ordinateur, effectue un procédé selon la revendication 9.

11. Support de données sur lequel un programme informatique selon la revendication 10 est stocké.

12. Signal de données transmis sur un réseau de télécommunications local ou étendu qui englobe les instructions exécutables par un ordinateur pour effectuer le procédé selon la revendication 9.
